# EUROPÄISCHE PATENTSCHRIFT

(11) **EP 0 633 751 B1**
(45) Veröffentlichungstag und Bekanntmachung des Hinweises auf die Patenterteilung: **12.06.1996**
(21) Anmeldenummer: 93906322.8
(22) Anmeldetag: 01.04.1993
(51) Int. Cl.: A61C 17/12, A61C 17/06, A61C 17/08

(54) **EINRICHTUNG AN EINER ZAHNÄRZTLICHEN ABSAUGANLAGE**
ARRANGEMENT ON A DENTAL SUCTION IMPLEMENT
AGENCEMENT DANS UN SYSTEME D'ASPIRATION UTILISE EN MEDECINE DENTAIRE

(30) Priorität: 02.04.1992 AT 674/92; 15.03.1993 WO PCT/AT93/00046
(43) Veröffentlichungstag der Anmeldung: 18.01.1995
(73) Patentinhaber: Trawöger, Werner, A-6173 Oberperfuss (AT); PREGENZER, Bruno, A-6173 Oberperfuss (AT)
(72) Erfinder: Trawöger, Werner, A-6173 Oberperfuss (AT); PREGENZER, Bruno, A-6173 Oberperfuss (AT)
(74) Vertreter: Hofinger, Engelbert, DDr.
(86) Internationale Anmeldenummer: AT9300061
(87) Internationale Veröffentlichungsnummer: WO9319697

(56) Entgegenhaltungen:
- EP-A- 0 445 091
- WO-A-90/01909
- WO-A-91/03214
- AT-B- 387 712
- DE-U- 7 121 112

## Beschreibung

Die Erfindung betrifft eine Einrichtung an einer zahnärztlichen Absauganlage, in der mittels Saugluft ein Flüssigkeitsfeststoffgemisch aus dem Mund des Patienten abgesaugt, über einen durch ein Mundstück, einen beweglichen Saugschlauch und einen Anschlußblock einer Schlauchablageeinheit führenden Saugkanal in einen Abscheider gefördert und dort von der Saugluft getrennt wird, mit einem Vorrat eines fließfähigen Zusatzmittels, mit einer Dosiervorrichtung, und mit einer Steuervorrichtung für die Zugabe des Zusatzmittels, wobei dem Mundstück eine Zugabestelle für das Zusatzmittel zum Gemisch zugeordnet ist.

Eine derartige Einrichtung ist aus der WO-A-90/01909 bekannt.

Für eine möglichst störungsfreie Funktion der Absauganlage ist deren Reinigung und Desinfektion unumgänglich. Um dabei auch den Saugschlauch und zumindest einen Teil des Mundstückes, nämlich das Saughandstück zu erfassen, sind bereits eine Reihe von Vorschlägen erfolgt, beispielsweise nach den DE-A 28 14 401, 29 29 804, 33 16 741, 39 00 108, 40 10 615 und 40 10 617, sowie nach dem DE-U 71 21 112. Allen gemeinsam ist, daß die Reinigung und Desinfektion des Schlauches nicht während der Behandlungstätigkeit, sondern nur in Ruhepausen erfolgen kann, da das Zusatzmittel vom Saugschlauch angesaugt werden muß oder er mit Wasser gefüllt wird (DE-A 39 00 108).

Eine zwar während des Saugbetriebes, jedoch eher zufällige, nicht beeinflußbare Reinigung und Desinfektion des Saugschlauches erfolgt nach den aus der EP-A 313 527 und US-A 4,054,998 bekannten Verfahren. Dort wird in einen Siebteil des Saughandstückes ein festes Zusatzmittel eingelegt, das sich bei Benetzung durch das Gemisch langsam auflöst.

Weiters beschreibt die EP-A 124 887 eine der Schlauchablage zugeordnete Einrichtung, die in das offene Ende eines nicht benutzten Saugschlauches Reinigungs- und/oder Desinfektionsmittel einbringt. Wird ein Saugschlauch benützt, so durchströmt das Reinigungs- und/oder Desinfektionsmittel nur noch den festen Teil der Schlauchablage und saugstromabwärts anschließende Teile.

Im Vergleich dazu beschreibt die WO-A 90/01909 eine gezielte und gesteuerte Einbringung des Zusatzmittels zur Reinigung, Desinfektion und Schaumvermeidung im Abscheider während des üblichen Saugbetriebes, wobei eine saugdruckgesteuerte Dosiervorrichtung in Intervallen das Zusatzmittel dem angesaugten Gemisch zugibt. In einer konstruktiv nicht ausgearbeiteten Variante ist die dosierte Zugabe des Zusatzmittels in das Mundstück erwähnt.

Ein nach dem Venturiprinzip arbeitendes Desinfektions- und Spülsystem beschreibt auch die WO-A 91/03214. Hier ist ein T-Stück mit einer zu einem Zusatzmittelbehälter abzweigenden Leitung zwischen das Mundstück und das Saugrohr eingesetzt und enthält eine Steuerung, über die die Menge des in das Saugrohr eingesaugten Zusatzmittels dosiert werden kann. In einer zweiten Ausführung quert das Saugrohr den Behälter, wodurch die schematisch frei durch den Raum gezeichnete Zweigleitung erübrigt wird. Die praktische Handhabung scheint eher schwierig, wenn am Mundstück die Zweigleitung oder der Behälter anliegt.

Die Erfindung hat es sich nun zur Aufgabe gestellt, bei einer Einrichtung der eingangs genannten Art die Zugabe des Zusatzmittels am Mundstück während des Behandlungsbetriebes konstruktiv so zu verwirklichen, daß weder der Patient noch der Zahnarzt gestört oder behindert wird, und eine optisch ansprechende Gestaltung des Behandlungsplatzes möglich ist.

Erfindungsgemäß wird dies dadurch erreicht, daß zumindest zwei Saugschläuche vorgesehen sind, daß die Dosiervorrichtung am Anschlußblock der Schlauchablageeinheit angeordnet ist, und daß von der Dosiervorrichtung pro Saugschlauch ein Zuführkanal ausgeht, der zwischen der Dosiervorrichtung und der Zugabestelle am Mundstück jeweils dem Saugkanal folgend vorgesehen ist.

Auf diese Weise wird das reinigende und desinfizierende Zusatzmittel jederzeit während des Behandlungsbetriebes, ohne diesen zu behindern, nahestmöglich der Ansaugöffnung des Mundstückes zugegeben, sodaß ein Teil des Mundstückes und der gesamte Saugschlauch vorzugsweise in kurzen Intervallen mit kleinen Portionen des Zusatzmittels behandelt werden. Das Mundstück setzt sich vorzugsweise aus dem erwähnten Saughandstück, von dem der Saugschlauch ausgeht, und einer abnehm- und austauschbaren Saugkanüle zusammen. Die Zugabestelle liegt insbesondere zwischen der Saugkanüle und dem Saughandstück im Bereich der Steckkupplung, und weist bevorzugt einen Ringraum im Saughandstück auf, aus dem mehrere Öffnungen über den Umfang verteilt in den innenliegenden Saugkanal münden.

Jeder Zuführkanal ist in dem seinem Saugschlauch zugeordneten Teil insbesondere als Zuführschlauch ausgebildet und mit der Innenwand des Saugschlauches verbunden, beispielsweise verklebt, oder bei einem doppelwandigen Saugschlauch zwischen der Außen- und der Innenwand angeordnet. Dadurch werden einerseits störende Geräusche, die ein frei geführter Zuführschlauch verursachen würde, und andererseits strömungsungünstige Flächen vermieden, die die Ablagerung von Gemischresten fördern. Der Ein- und Austritt des Zuführschlauches erfolgt in einer bevorzugten Ausführung an den beiden Enden des Saugschlauches über ein Saugschlauchanschlußstück. Dieses ist vorzugsweise mit einem Steckzapfen versehen, der eine zwischen zwei Dichtungen ausgebildete Umfangsnut aufweist, wobei die Umfangsnut über einen Kanal in der Wandung des Saugschlauchanschlußstückes mit dem Zuführschlauch verbunden sein kann. Ebenso ist aber auch eine entsprechende Führungsrille oder dergleichen denkbar, über die der Zuführschlauch nach außen gelangt.

Eine besonders kompakte Anordnung ergibt sich, wenn die Dosiervorrichtung und die Steuervorrichtung in einem Steuerblock zusammengefaßt sind, der mit dem an der Schlauchablageeinheit angeordneten Anschlußblock für jeden Saugschlauch verbunden ist. In einer bevorzugten Ausführung ist weiters vorgesehen, daß am Anschlußblock pro Saugschlauch ein Rohrknie drehbar angeordnet ist, dessen Kupplungselement einen Ringraum aufweist, der mit der Umfangsnut des Saugschlauchanschlußstückes korrespondiert, und der mit einem Leitungskanal des Steuerblockes strömungsverbunden ist. Die Steuervorrichtung kann auch die Steuerung der Saugluft in den Saugschläuchen übernehmen, wenn das Rohrknie eine Absperreinrichtung für den Saugkanal und einen vom Ringraum des Kupplungselementes nach außen führenden Anschlußstutzen aufweist.

Nachstehend wird nun die Erfindung anhand der beiliegenden Zeichnungen näher beschrieben, ohne darauf beschränkt zu sein.
- Fig. 1: zeigt eine schematische Übersicht einer zahnärztlichen Absauganlage,
- Fig. 2: eine feste Ausführung des Mundstückes mit Saugschlauchanschlußstutzen,
- Fig. 3: einen Axialschnitt durch die Gelenkachse in Fig. 2,
- Fig. 4 und 5: eine weitere Ausführung eines Mundstückes mit einem vorderen Saugschlauchanschlußstutzen, wobei Fig. 4 eine Explosionsdarstellung ist,
- Fig. 6 und 7: Details einer dritten Ausführung eines Mundstückes,
- Fig. 8: einen Querschnitt durch einen Saugschlauch,
- Fig. 9: einen Längsschnitt durch einen hinteren Saugschlauchanschlußstutzen,
- Fig. 10 und 11: Ansichten eines Steuerblockes,
- Fig. 12 bis 21: Schnitte nach den entsprechenden Linien XII-XII bis XXI-XXI in den Fig. 10 und 11,
- Fig. 22 bis 24: Ansichten eines Anschlußknies zwischen Saugschlauch und Anschlußblock,
- Fig. 25 bis 28: Ansichten einer zweiten Ausführung des Steuerblockes,
- Fig. 29 bis 31: Schnitte nach den Linien XXIX-XXIX bis XXXI-XXXI der Fig. 27.

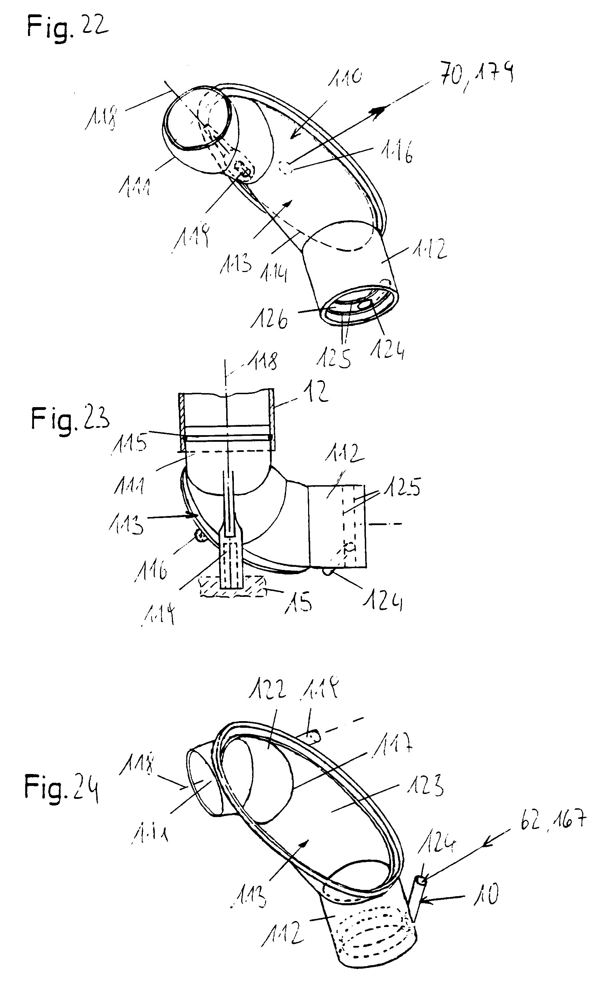

Eine zahnärztliche Absauganlage ist an einem Behandlungsplatz 1 vorgesehen, dessen Schlauchablageeinheit mit 14 beziffert ist und zwei Saugschläuche 2 aufnimmt. Ein Saugkanal 22 nimmt jeweils an einem Mundstück 3 seinen Anfang und führt über den Saugschlauch 2 zur Schlauchablageeinheit 14 und von dort zu einem Abscheider 6. In diesem findet eine Abtrennung der Saugluft statt, die über einen weiteren Saugkanal 4 zur Saugpumpe 5 führt. Der Abscheider trennt insbesondere auch das über den Saugkanal 22 aus dem Mund des Patienten angesaugte Feststofflüssigkeitsgemisch, wobei die feststoffreie Flüssigkeit den Abscheider 6 über die Leitung 7 verläßt, während die Feststoffe in einem Sammelbehälter gesammelt werden. An der Schlauchablageeinheit 14 ist ein Anschlußblock 12 vorgesehen, an dem der bzw. die Saugschläuche 2 angesteckt sind. Der Anschlußblock 12 kann ein Sieb und einen Durchflußmengenregler enthalten, und ist pro Saugschlauch 2 mit einem in Fig. 22 gezeigten Rohrknie versehen. Dem Anschlußblock 12 bzw. der Schlauchablageeinheit 14 zugeordnet sind ein Steuerblock 13 und eine Dosiervorrichtung 9, die mit einem Vorrat 8 eines konzentrierten, fließfähigen Zusatzmittels in Verbindung steht. Das konzentrierte fließfähige Zusatzmittel enthält ein Reinigungsmittel und/oder ein Desinfektionsmittel und/oder ein Antischaummittel und wird über die Dosiervorrichtung 9 und einen Zuführkanal 10, der dem Saugkanal 22 folgt bzw. zu ihm parallel verläuft, bis in das Mundstück 3 gebracht. Am Mundstück 3 gelangt es durch die Zugabestelle 11 in den Saugkanal 22. Die Zugabe des Zusatzmittels erfolgt im Betrieb der Sauganlage, sodaß es dem abgesaugten Gemisch zugegeben wird und durch den gesamten Saugkanal 22 geführt wird. Die Zugabe erfolgt insbesondere in Intervallen und gleichbleibenden Portionen, wobei die Intervalle und die Mengen pro Dosiervorgang für den zu behandelnden Saugschlauch über die Steuervorrichtung bestimmt werden, die vorzugsweise auch die Saugluft nur im jeweils verwendeten Saugschlauch 2 steuert.

Da der Saugschlauch 2 beweglich ist - er wird von der Schlauchablageeinheit 14 abgenommen, in den Mund des Patienten jeweils an die benötigte Stelle bewegt, und dann wieder in die Schlauchablageeinheit 14 eingehängt - ist es notwendig, den Zuführkanal 10 ebenfalls entsprechend beweglich anzuordnen, sodaß er die Arbeit nicht behindert. Wie Fig. 8 zeigt, verläuft daher der Zuführkanal 10 im Saugschlauch 2 in einem Zuführschlauch, der an der Innenwand des Saugschlauches 2 fixiert, beispielsweise angeklebt ist. Der Saugschlauch 2 weist somit eine in Längsrichtung nicht unterbrochene Innenfläche auf, und es werden strömungsungünstige Bereiche vermieden, in denen sich Gemischreste ablagern können. Wird ein doppelwandiger Saugschlauch 2 verwendet, ist der Zuführschlauch ebenfalls mit der Innenwand, jedoch mit ihrer Außenseite verbunden und liegt somit zwischen der Innenwand und einer bei doppelwandigen Schläuchen üblichen, schraubenförmigen Verstärkungseinlage.

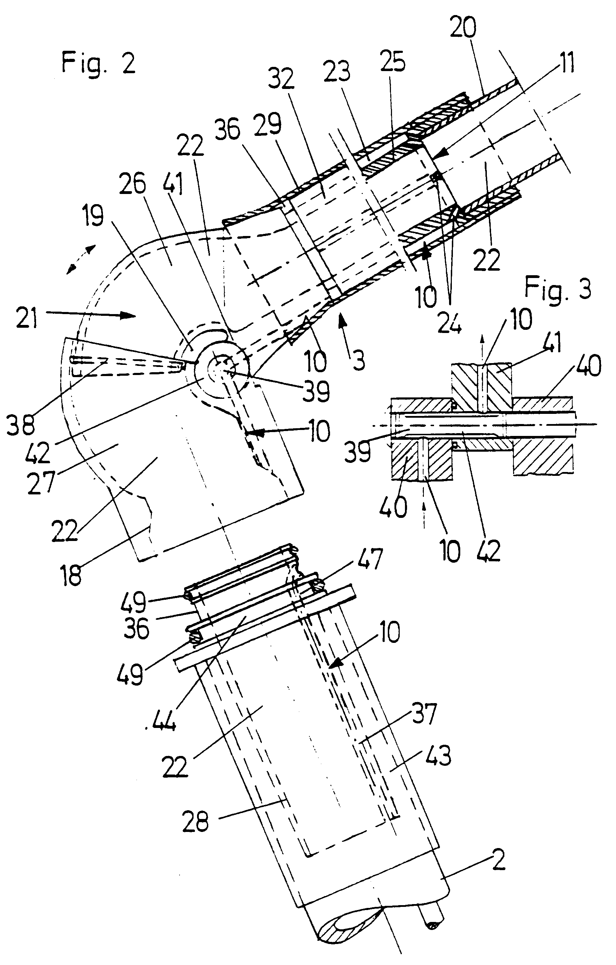

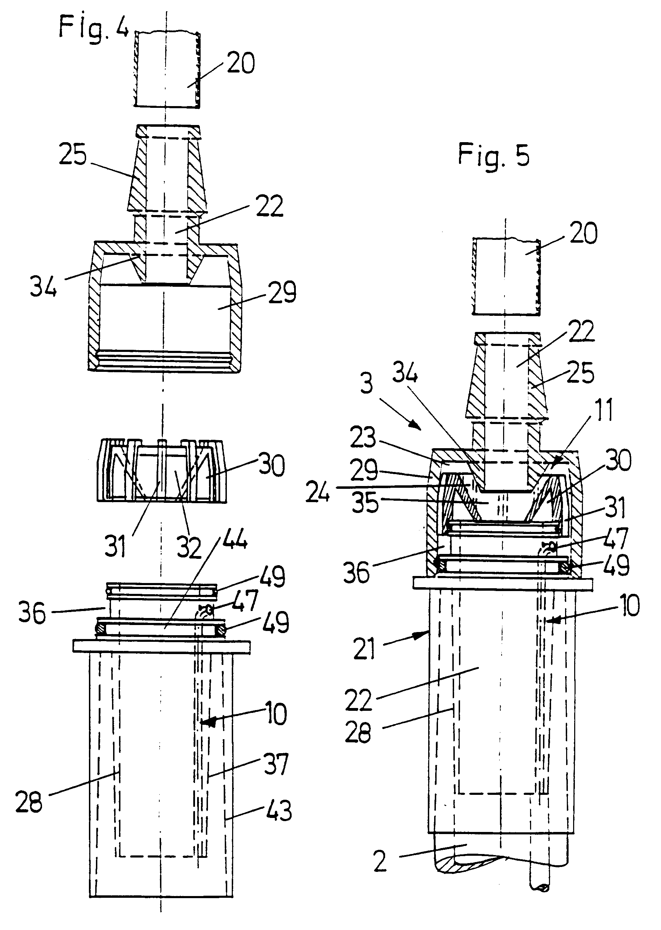

Der Saugschlauch 2 trägt an beiden Enden je ein Schlauchanschlußstück 28,45, wobei das vordere Schlauchanschlußstück 28 mit dem Saughandstück 21 verbunden ist, an das die Saugkanüle 20 angesteckt ist. Wie Fig. 2 und 4 zeigt, trägt das Schlauchanschlußstück 28 einen abgestuften Steckzapfen 44, an dem zwischen zwei Dichtungsringen 49 verschiedenen Durchmessers eine Umfangsnut 36 ausgebildet ist. In dieser mündet ein nach außen gekrümmter Kanal 47, der das geschlossene Ende einer Rille 37 des Schlauchanschlußstückes 28 bildet. In dieser Rille 37 liegt das Ende des Zuführschlauches, wenn das Schlauchanschlußstück 28 auf den Saugschlauch 2 aufgesteckt ist. Das Ende des Saugschlauches 2 wird von einer äußeren Hülle 43 dichtend umschlossen, sodaß das durch den Zuführschlauch zugeführte Zusatzmittel nur über den gekrümmten Kanal 47 in die Umfangsnut 36 austreten kann.

Das Saughandstück 21 gemäß Fig. 2 und 3 ist aus zwei gelenkig miteinander verbundenen gebogenen Teilen gebildet, nämlich dem die Stecköffnung aufweisenden Schwenkteil 27 und dem Griffteil 26. Die Gelenkachse verläuft außerhalb des Saugkanals 22 und umfaßt einen Schwenkbolzen 39, der eine mittlere Gelenkslasche 41 und zwei äußere Gelenkslaschen 40 durchsetzt. Sowohl im Schwenkteil 27 als auch im Griffteil 26 des Saughandstückes 21 verläuft der Saugkanal 22 über einen Winkel von etwa 90° gebogen außerhalb der Gelenkslaschen 40,41, wobei der Kanalbogen des Griffteiles 26 einen kleineren Durchtrittsquerschnitt aufweist, sodaß er in den Kanalbogen des Schwenkteiles 27 eingreift. Ein Dichtring 38 oder dergleichen dichtet die beiden ineinander um etwa 80° verschwenkbaren Kanalbögen ab, deren Querschnittsfläche bevorzugt, jeweils eine parallel zum Schwenkbolzen 39 abgeflachte Kreisfläche ist. Um das Ineinanderschwenken zu ermöglichen, ist zwischen dem Kanalbogen des Griffteiles 26 und der mittleren Gelenkslasche 41 ein gebogener Schlitz 19 ausgespart. Die Muffe des Schwenkteiles 27 weist eine Wandabstufung 18 auf, zu deren beiden Seiten die Dichtringe 49 des Steckzapfens 44 den Saugkanal 22 gegen die Umfangsnut 36 abdichten. In der Wandabstufung 18 mündet ein weiterer Abschnitt des Zuführkanals 10, der sich weiter über eine der beiden Gelenkslaschen 40 (Fig. 3) in die Bohrung für den Schwenkbolzen 39 erstreckt. Der Schwenkbolzen 39 weist eine Umfangsverjüngung 42 auf, sodaß das über den Zuführkanal 10 in die Bohrung des Schwenkbolzens 39 gelangende Zusatzmittel entlang der Umfangsverjüngung 42 bis in die mittlere Gelenkslasche 41 des Griffteiles 26 gelangen kann, in der ein weiterer Abschnitt des Zuführkanals sich bis zu einer zweiten Umfangsnut 36 fortsetzt. Der an die Umfangsnut 36 anschließende Abschnitt des Griffteiles 26 bildet eine Kupplungshülse 25, in die die Saugkanüle 20 einsteckbar ist. Die Kupplungshülse 25 trägt außenseitige Längsrippen 31 und Längsrillen 32, die die Umfangsnut 36 mit einem vorderen Ringraum 23 verbinden, aus dem mehrere Öffnungen 24 in den Saugkanal 22 münden. Die Öffnungen 24 bilden somit die Zugabestelle 11 für das Zusatzmittel am Mundstück 3, die im Bereich der Steckkupplung für die Saugkanüle 20 liegt. Als äußere Begrenzung der Umfangsnut 36, der Längsrillen 32 und des Ringraumes 23 dient insbesondere eine aufgeschobene Außenhülse 29.

Die Ausführung nach Fig. 4 und 5 zeigt ein Mundstück 3 ohne Gelenk. Das Saughandstück 21 weist ein Schlauchanschlußstück 28 auf, das gleich wie das in Fig. 2 ausgebildet ist. Auf den kleineren der beiden Dichtringe 49 des Steckzapfens 44 ist ein Zwischenstück 30 aufgesetzt, das außenseitig Längsrippen 31 und Längsrillen 32 aufweist und innen mit einem Trichter 35 versehen ist, der sich in Saugrichtung verjüngt. Das Zwischenstück 30 liegt innerhalb einer Außenhülse 29, die auf den größeren der beiden Dichtringe 49 des Steckzapfens 44 aufgesteckt ist und die Kupplungshülse 25 für die Saugkanüle 20 bildet. Die Kupplungshülse 25 setzt sich ins Innere der Außenhülse 29 in Form eines Trichters 34 fort, der in den Trichter 35 ragt. Der Zuführkanal 10 verläuft in dieser Ausführung vom Austritt in die Umfangsnut 36 über die Längsrillen 32 zum Ringraum 23, wobei die Öffnung 24 zwischen den beiden Trichtern 34,35 die Zugabestelle 11 für das Zusatzmittel in den Saugkanal 22 darstellt.

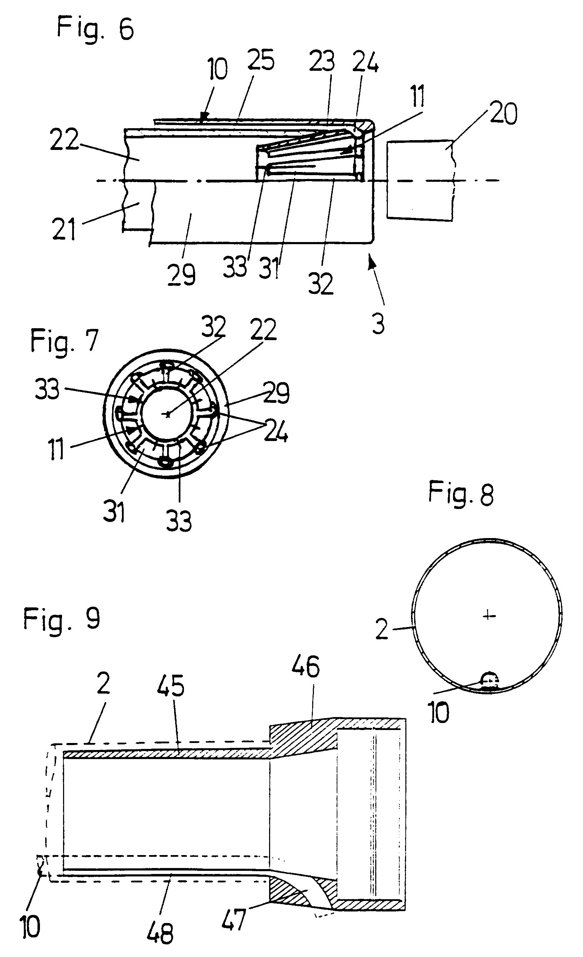

Die Fig. 6 und 7 zeigen den Bereich der Steckkupplung einer dritten Ausführung, die im übrigen gelenkig, gemäß Fig. 2 und 3, oder starr, gemäß Fig. 4 und 5, ausgebildet sein kann. Hier ist die Außenhülse 29 trichterförmig nach innen gezogen, wobei dieser Bereich wiederum Längsrippen 31 und Längsrillen 32 aufweist und in die Kupplungshülse 25 eingreift. Im Eingriffsbereich sind Schlitze 33 vorgesehen, sodaß der Eingriffsbereich von der eingesteckten Saugkanüle 20 aufgeweitet und gegen die Kupplungshülse 25 gespreizt wird. Auch in dieser Ausführung ist die Zugabestelle 11 unmittelbar an der Steckkupplung für die Saugkanüle 20 ausgebildet, deren Sitzfläche ebenfalls mit dem Zusatzmittel benetzt wird, wobei die Öffnungen 24 aus dem Ringraum 23 zwischen der Außenhülse 24 und der Kupplungshülse 25 im vordersten Bereich liegen.

Am hinteren Ende des Saugschlauches 2 ist bevorzugt ein gleichartiges Schlauchanschlußstück 28 vorgesehen, das in ein Rohrknie gemäß Fig. 22 bis 24 eingesteckt werden kann. Alternativ kann am hinteren Ende auch ein Schlauchanschlußstück 45 gemäß Fig.9 vorgesehen sein, das anstelle der Rille 37 des vorderen Schlauchanschlußstückes 28 einen Längsspalt 48 aufweist. Der Längsspalt 48 setzt sich in einen nach außen gebogenen Kanal 47 fort, der eine Kupplungsmuffe 46 des Schlauchanschlußstückes 45 durchsetzt. Für die Verwendung dieses Schlauchanschlußstückes 45 überragt der Zuführschlauch das Ende des Saugschlauches 2, sodaß er durch den Kanal 47 nach außen gezogen und an die Dosiervorrichtung 9 angeschlossen werden kann. Die Abdichtung des Spaltes 48 wird durch den aufgeschobenen Saugschlauch 2 erzielt, wobei eine äußere Hülle 43 ebenfalls ausgebildet sein kann.

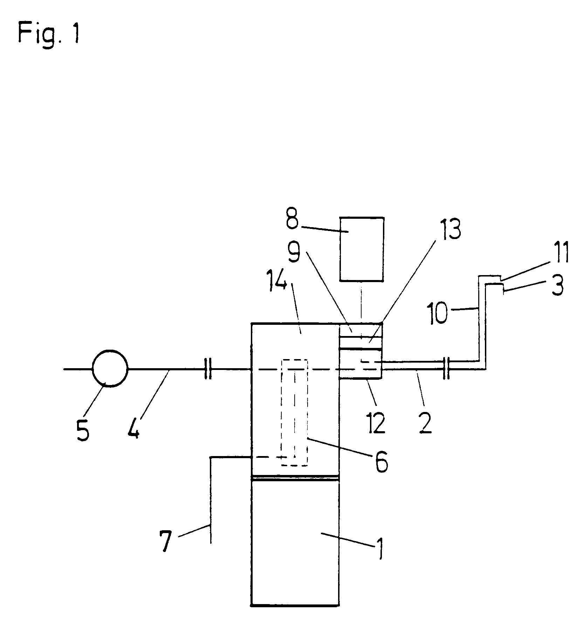

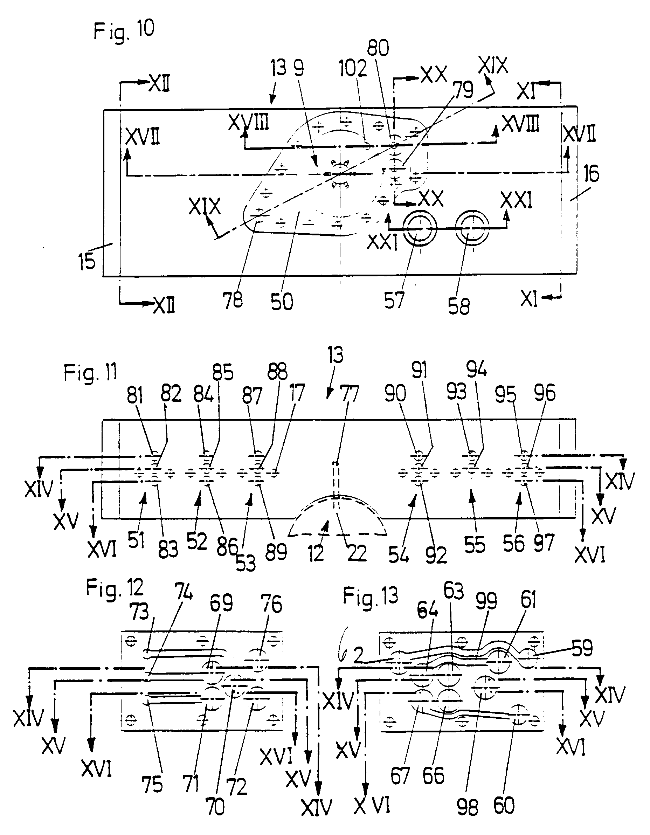

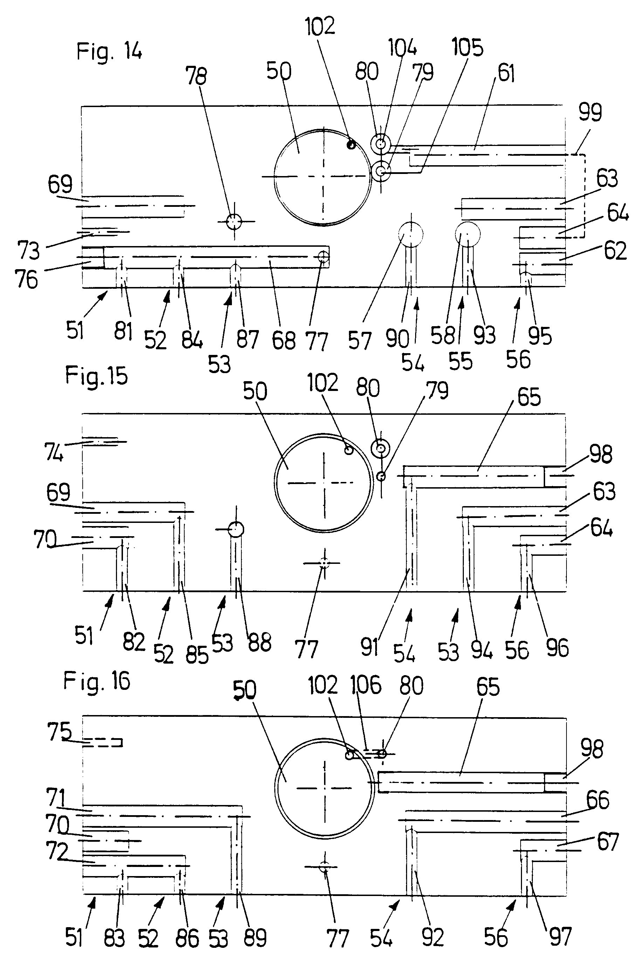

Die Dosiervorrichtung 9 und die Steuervorrichtung sind bevorzugt in einem Steuerblock 13 zusammengefaßt, der auf den Anschlußblock 12 (Fig. 1,11) aufgesetzt sein kann. Eine erste Ausführung des quaderförmigen Steuerblockes 13, die in den Fig. 10 bis 21 näher beschrieben ist, trägt Befestigungsbohrungen 17 für sechs Steuerventile 51 bis 56, insbesondere Magnetventile, die mit Ausnahme des Steuerventils 55 3/2-Wegeventile darstellen. Dem ersten Steuerventil 51 (in Fig. 11 links) sind somit drei Querkanäle 81,82 und 83, dem zweiten Steuerventil 52 drei weitere Querkanäle 84,85 und 86, dem dritten Steuerventil 53 drei weitere Querkanäle 87,88 und 89, dem vierten Steuerventil 54 drei weitere Querkanäle 90,91 und 92, dem fünften, ein 2/2-Wegeventil darstellendes Steuerventil 55 zwei Querkanäle 93 und 94 und schließlich dem sechsten Steuerventil 56 nochmals drei Querkanäle 95,96 und 97 zugeordnet, die sich jeweils unterschiedlich weit in den Steuerblock 13 erstrecken.

Der Steuerblock 13 weist an den beiden Stirnseiten Seitenteile 15 und 16 auf, die Längskanäle 61 bis 72 des Steuerblockes verschließen und Anschlüsse tragen. Im einzelnen sind an der linken Seite des Steuerblockes 13 (Fig. 12) Längskanäle 68 bis 72 und an der rechten Seite (Fig. 13) Längskanäle 61 bis 67 vorgesehen.

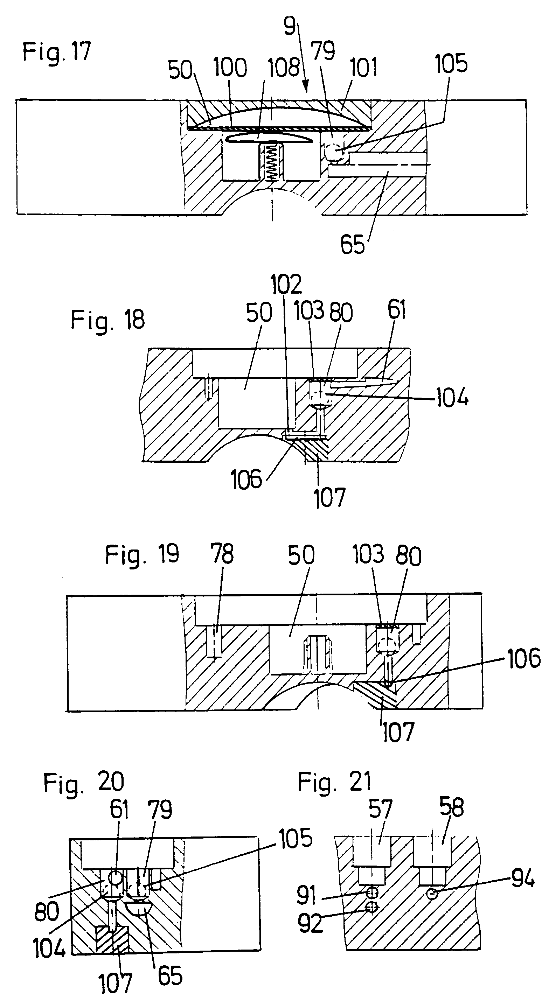

Gemäß Fig. 14 münden die Querkanäle 81,84 und 87 der ersten drei Steuerventile 51 bis 53 in einen gemeinsamen Längskanal 68, der, wenn durch eine Bohrung hergestellt, endseitig durch einen Verschluß 76 verschlossen ist, und in dem ein Steigkanal 77 endet, der an der Unterseite aus dem Steuerblock 13 austritt, in den Anschlußblock 12 eintritt und dort in den Saugkanal 22 mündet. Der Querkanal 90 des vierten Steuerventils 54 mündet in einen zweiten Steigkanal 57, der an der Oberseite des Steuerblockes 13 austritt (Fig. 10,21), und der Querkanal 93 des fünften Steuerventils 55 mündet in einen dritten Steigkanal 58, der ebenfalls an der Oberseite des Steuerblockes 13 austritt (Fig. 10,21). Der Querkanal 95 des sechsten Steuerventiles 56 mündet in einen Längskanal 62, der dann aus dem Anschlußkanal 59 nach hinten geführt ist. In der oberen Schnittebene der Fig. 14 ist weiters der Längskanal 61 ersichtlich, der einerseits über einen Verbindungskanal 99 (Fig. 13) mit dem zur mittleren Schnittebene zugehörigen Längskanal 64 verbunden ist, und andererseits in einen fünften Steigkanal 80 mündet, in dem ein der Dosiervorrichtung 9 zugehöriges erstes Rückschlagventil 104 (Fig. 18,20) angeordnet ist. Der fünfte Steigkanal 80 mündet über einen unteren Verbindungskanal 106 in einen im Boden einer Vertiefung der Pumpenkammer 50 öffnenden sechsten Steigkanal 102. Aus herstellungstechnischen Gründen weist der Steuerblock 13 eine Bodenöffnung auf, über die der Verbindungskanal 106 hergestellt und durch einen Verschluß 107 verschlossen ist.

Fig. 15 zeigt eine mittlere Schnittebene, wobei der Querkanal 82 des ersten Steuerventils 51 in den Längskanal 70 mündet, von dem aus ein Anschlußkanal 73 (Fig. 12,14) nach hinten oben gezogen ist. Der Querkanal 85 des zweiten Steuerventils 52 mündet in den Längskanal 69, von dem aus ein Anschlußkanal 74 (Fig. 12) horizontal nach hinten geführt ist. Der Querkanal 88 des dritten Steuerventils 53 mündet in einen vierten Steigkanal 78, der in einen Pumpenraum 50 der Dosiervorrichtung 9 öffnet. Der Querkanal 91 des vierten Steuerventils 54 mündet in einen Längskanal 65, der, wenn er von der Stirnseite gebohrt worden ist, durch einen Stopfen 98 verschlossen ist. Der Längskanal 65 öffnet in einen siebten Steigkanal 79, in dem gemäß Fig. 17 und 20 ein zweites Rückschlagventil 105 der Dosiervorrichtung 9 angeordnet ist. Der Querkanal 94 des fünften Steuerventiles 55 mündet in den Längskanal 63. Schließlich ist in der mittleren Schnittebene noch der Querkanal 96 des sechsten Steuerventiles 56 gezeigt, der in den bereits erwähnten Längskanal 64 mündet, der über den Verbindungskanal 99 mit dem Längskanal 61 der ersten Schnittebene verbunden ist, wie dort beschrieben wurde.

Fig. 16 zeigt eine dritte horizontale Schnittebene durch den Steuerblock 13. Der Querkanal 83 des ersten Steuerventiles 51 und der Querkanal 86 des zweiten Steuerventiles 52 münden in den Längskanal 72. Der Querkanal 89 des dritten Steuerventiles 53 öffnet in den Längskanal 71, der mit dem Anschlußkanal 75 verbunden ist (Fig. 12). An der rechten Seite mündet der Querkanal 92 des vierten Steuerventils 53 in den Längskanal 66 und der Querkanal 97 des sechsten Steuerventils 56 in den Längskanal 67, der mit dem Anschlußkanal 60 (Fig. 13) verbunden ist.

Wie erwähnt, nimmt die Schlauchablageeinheit 14 zwei Saugschläuche 2 auf, wobei in dem in den Anschlußblock 12 führenden Rohrknie 110 für jeden Saugschlauch 2 eine eigene durch ein Membranventil 113,114 gebildete Absperreinrichtung vorgesehen ist. Jede Absperreinrichtung wird durch den Unterdruck der Sauganlage offen und durch atmosphärischen Druck geschlossen gehalten. Bei abgeschalteter Sauganlage sind die Saugschläuche 2 in die Schlauchablageeinheit 14 eingehängt und damit die beiden Steuerventile 51 und 52 in Ruhestellung. Dies bedeutet, daß über den offenen, mit der Atmosphäre verbundenen Längskanal 72 (Fig. 16) und die beiden Querkanäle 83 und 86 Außenluft durch die Steuerventile 51 und 52 über die Querkanäle 82 und 85, die Längskanäle 70 und 69 (Fig. 15) und die Anschlußkanäle 73 und 74 zu den beiden in den Rohrknien 110 angeordneten Absperrvorrichtungen der Saugschläuche 2 gelangt, die somit geschlossen sind. Wird ein Saugschlauch 2 abgenommen, schaltet sich die Sauganlage ein und das zugehörige Steuerventil 51 wird aktiviert, sodaß die Verbindung zwischen den Querkanälen 81 und 82 hergestellt ist. Über den ersten Steigkanal 77, der mit dem Saugkanal 22 im Anschlußblock 12 verbunden ist, herrscht im Längskanal 68 und den beiden Querkanälen 81 und 84 der Steuerventile 51 und 52 Unterdruck. Dank der Verbindung der Querkanäle 81 und 82 des ersten Steuerventiles 51 herrscht auch im Längskanal 70 (Fig.15), dem Anschlußkanal 73 (Fig. 12) und damit in der Ventilkammer 113 des Rohrknies 110 Unterdruck, sodaß die Membran 114 von der Anpreßfläche 117 entfernt und der Saugkanal 22 offengehalten wird. Ist hingegen der zweite Saugschlauch 2 abgenommen, so ist anstelle des ersten Steuerventiles 51 das zweite Steuerventil 52 aktiviert und die Verbindung des Querkanales 84 mit dem Querkanal 85 geöffnet, sodaß der Unterdruck über den Längskanal 69 und den Anschlußkanal 74 (Fig. 12) die zweite Absperrvorrichtung offen hält.

Über den Längskanal 68 und den Querkanal 87 liegt bei eingeschalteter Sauganlage auch am dritten Steuerventil 53 Unterdruck an. Dessen Querkanal 89 ist über den Längskanal 71 und den Anschlußkanal 75 mit Druckluft (beispielsweise 3 bar) verbunden. Durch entsprechende Ansteuerung des dritten Steuerventiles 53 kann daher über den mittleren Querkanal 88 und den vierten Steigkanal 78 eine im Pumpenraum 50 angeordnete Membran 100, die mittels des Deckels 101 (Fig. 17) fixiert ist, wechselweise mit Unter- und Überdruck beaufschlagt werden, sodaß die Membran 100 das Volumen des Pumpenraumes 50 verändert. Ein federnd im Pumpenraum 50 angeordnetes Rückstellelement drückt gegen die Membran 100.

Das fünfte Steuerventil 55 dient zur Herstellung der Verbindung zwischen dem dritten Steigkanal 58 und dem oberen Querkanal 93 mit dem mittleren Querkanal 94 und dem Längskanal 63, der mit einer Frischwasserquelle verbunden ist. Das fünfte Steuerventil 55 stellt somit ein Wasserhauptventil dar, über das das Wasser durch den Steigkanal 58 in einen Wasservorratsbehälter fließt, der bevorzugt auf den Steuerblock 13 aufgesetzt ist und eine freie Fallstrecke enthält, sodaß ein eventueller Rückfluß unmöglich ist. Der Wasservorratsbehälter weist einen Abfluß auf, der an den Längskanal 66 angeschlossen ist (Fig. 13), sodaß im Querkanal 92 des vierten Steuerventils 54 Frischwasser zur Verfügung steht. Der obere Querkanal 90 des vierten Steuerventils 54 ist über den zweiten Steigkanal 57 mit dem vorzugsweise ebenfalls auf den Steuerblock 13 aufgesetzten Vorrat 8 des konzentrierten Zusatzmittels verbunden, sodaß durch das vierte Steuerventil 54 Wasser oder Zusatzmittel durch den Querkanal 91 in den Längskanal 65 eingespeist wird, der an der Stirnseite durch den Verschluß 98 verschlossen ist. Der Längskanal 65 mündet an der anderen Seite in den siebten Steigkanal 79 unterhalb des dort enthaltenen zweiten Rückschlagventiles 105 in den Pumpenraum 50 (Fig. 17,20). Die Vergrößerung des Pumpenraumes 50 durch Beaufschlagung der Membran 100 (drittes Steuerventil 53) öffnet das zweite Rückschlagventil 105 und läßt die vom vierten Steuerventil 54 über den Längskanal 65 kommende Flüssigkeit in den Pumpenraum 50 einströmen, wobei das Zusatzmittel durch entsprechende Schaltung des vierten Steuerventils 54 eine wählbare Verdünnung aufweist. Wird der Pumpenraum 50 wieder verkleinert, so wird das dort enthaltene verdünnte Zusatzmittel über den sechsten Steigkanal 102 und den unteren Verbindungskanal 106 in den fünften Steigkanal 80 verdrängt, in dem das erste Rückschlagventil 104 angeordnet ist. Ein in Fig. 18 schematisch eingezeichneter Verschluß 103 läßt sich durch entsprechende Ausbildung des Deckels 101 auch durch die vom Deckel 101 auf die obere Öffnung des fünften Steigkanals 80 gepreßte Membran 100 erzielen. Das verdünnte Zusatzmittel fließt nach Passage des ersten Rückschlagventils 104 somit über den Längskanal 61 (Fig. 14), den Verbindungskanal 99 (Fig. 13), den Längskanal 64 und den Querkanal 96 (Fig. 15) zum sechsten Steuerventil 56. Dieses ist entsprechend dem in Verwendung stehenden Saugschlauch 2 mit dem ersten oder zweiten Steuerventil 51 oder 52 gekoppelt und stellt entweder die Verbindung zum Querkanal 95 und dem Längskanal 62 (Fig. 14) oder zum Querkanal 97 und dem Längskanal 67 (Fig. 16) her. Der Längskanal 62 bzw. dessen Anschlußkanal 59 (Fig. 14) einerseits und der Längskanal 67 bzw. dessen Anschlußkanal 60 andererseits sind jeweils mit einem Zuführkanal 10 verbunden, der in den jeweiligen Saugschlauch 2 über das Schlauchanschlußstück 45 am Anschlußblock 12 eingeführt ist. Das von der Dosiervorrichtung 9 bereitgestellte, verdünnte Zusatzmittel wird daher von der Membranpumpe über das sechste Steuerventil 56 und den Zuführkanal 10 zur Zugabestelle 11 in den Sammelkanal 22 des jeweils verwendeten Saugschlauches 2 gefördert und während des Saugbetriebes dem Gemisch zugegeben. Über die Steuerung kann dabei wahlweise eine kontinuierliche oder eine diskontinuierliche Zugabe in wählbaren Intervallen eingestellt werden.

Für die Verbindung zwischen dem Saugschlauch und dem Anschlußblock 12 ist jeweils ein Rohrknie 110 vorgesehen, das zwei Rohrabschnitte 111, 112 aufweist, von denen der Rohrabschnitt 111 als Kupplungsteil zum Anschluß an eine Muffe des Anschlußblockes 12 ausgebildet ist. In der Drehachse 118 des ersten Rohrabschnittes 111 liegt weiters ein Lagerzapfen 119, der von der der Öffnung des Rohrabschnittes 111 gegenüberliegenden Wand absteht und am Anschlußblock 12 bzw. dem Seitenteil 15,16 des Steuerblockes 13 drehbar gelagert ist. Das Rohrknie 110 weist dadurch einen zweiten Lagerbereich auf, der die Steckverbindung und Dichtung 115 zwischen dem Rohrabschnitt 111 und dem Anschlußblock 12 schont. Das Rohrknie 110 weist weiters eine Ventilkammer 113 auf, die schräg zu beiden Rohrabschnitten 111,112 liegt und durch eine Membran 114 als Absperreinrichtung begrenzt ist.

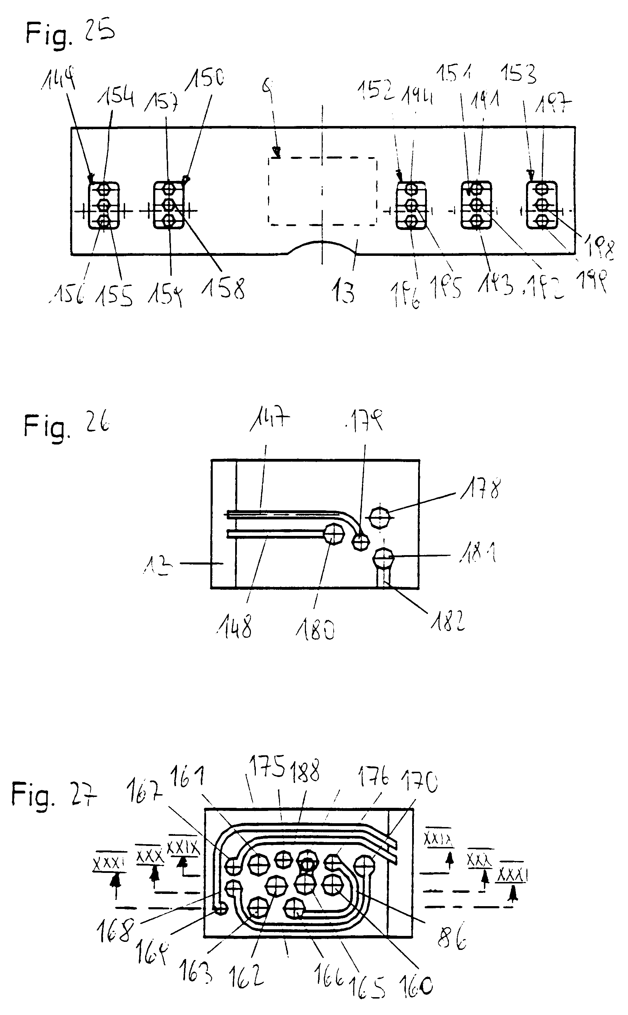

Fig. 24 zeigt das Rohrknie 110 mit geöffneter Ventilkammer 113. Die Endbereiche 122,123 der Rohrabschnitte 111,112 erweitern sich trichterartig bzw. etwa konisch zur Anpreßfläche 117 der Membran 114 hin. Die Anpreßfläche 117 beschränkt sich dadurch auf einen schmalen, konkaven Übergangssteg zwischen den beiden Rohrabschnitten 111,112, wobei die Krümmungslinie des Übergangssteges der Wölbung der Membran angepaßt ist. Flächen sind dadurch vermieden, an denen die dichtende Anlage der hier nicht gezeigten Membran behindernde Ablagerungen auftreten können. Durch die trichterartige Erweiterungen der Rohrabschnitte 111,112 ist der Querschnitt des Rohrknies 110 auch im Bereich der Membran 114 nicht verengt, da das Rohrknie 110 an der Knieinnenseite ausgebaucht ist. Die Ventilkammer 113 ist beispielsweise durch einen nicht gezeigten Deckel verschlossen, der eingeklebt, eingeschweißt oder eingerastet ist und die Membran 114 klemmt.

Für die Einbringung des Druckmediums ist ein Anschlußstutzen 116 vorgesehen, der insbesondere am Deckel ausgebildet ist. Herrscht in der Ventilkammer 113 ein höherer Druck als in den Rohrabschnitten 111,112, so ist die Membran 114 an die Anpreßfläche 117 angepreßt und der Durchgang durch das Rohrknie 110 gesperrt. Ist hingegen der Druck geringer, so ist die Membran 114 von der Anpreßfläche 117 angehoben und der Durchgang offen. Bevorzugt ist die Membran 114 in Schließstellung vorgespannt und liegt daher bei normalem Luftdruck in der Ventilkammer 113 auf der Anpreßfläche 117 auf. Bei Verwendung des Saugschlauches 2 wird die Verbindung der Ventilkammer 113 mit der Saugpumpe 4 über den ersten Steigkanal 77 hergestellt und die Membran 114 von der Anpreßfläche 117 abgehoben. Da der Deckel der Ventilkammer 113 an der Knieaußenseite liegt, könnte auch der Anschlußstutzen 116 als Lagerzapfen 119 dienen, wobei das Rohrknie 110 dann einen einfachen Bogen bildet. In der gezeigten Ausführung ist der Rohrabschnitt 111 selbst um etwa 45° gebogen, sodaß der Lagerzapfen 119 die Ventilkammer 113 seitlich passiert. Weiters könnte der Lagerzapfen 113 auch einen Abzweig- oder Zufuhrkanal bilden. In dem eine Kupplungsmuffe für ein Saugschlauchanschlustück 28 gemäß Fig. 2 bildenden zweiten Rohrabschnitt 112 ist zwischen den Anlageflächen 125 für die beiden Dichtungen 49 ein Ringraum 126 ausgebildet, in den ein Anschlußstutzen 124 mündet, über den das von der Steuervorrichtung dosierte Zusatzmittel in den Zufuhrkanal 10 eingebracht wird.

Der Anschlußstutzen 124 kann, wenn auch der Lagerzapfen 116 einen Kanal bildet, mit diesem durch einen Schlauch od.dgl. verbunden sein, der im Rohrabschnitt 111 wiederum in eine Umfangsnut mündet. Auf diese Weise kann die zusätzliche Leitung die Absperreinrichtung 113,114 extern umgehen, und wieder mit einem innenführenden Abschnitt des Zuführkanals 10 verbunden sein.

Eine weitere Ausführung des auf den Anschlußblock 12 aufgesetzten Steuerblocks 13 zeigen die Fig. 25 bis 31. In dieser Ausführung trägt der Steuerblock nur fünf Steuerventile 149,150,151,152 und 153, die alle 3/2-Wegemagnetventile darstellen. Durch die Verwendung von über eine Freifallstrecke zugeführtem Leitungswasser als Arbeitsmedium kann das dritte Steuerventil 53 der ersten Ausführung eingespart werden, wenn auch das fünfte Steuerventil 55 durch ein 3/2-Wegeventil ersetzt wird.

Die zweite Ausführung des Steuerblocks 13 trägt daher nur Befestigungsbohrungen für fünf Steuerventile 149 bis 153, alle in Form von 3/2-Wegemagnetventilen. Dem ersten Steuerventil 149 sind drei Querkanäle 154,155 und 156 und dem zweiten Steuerventil 150 drei weitere Querkanäle 157,158 und 159 zugeordnet. Die beiden Steuerventile 149 und 150 schalten mittels Luft, die über den mit beiden Querkanälen 154 und 155 verbundenen durch den Seitenteil 15 von außen geschlossenen Längskanal 178 und den Vertikalkanal 177 in die Saugleitung 4 zur Saugpumpe 5 (Fig. 1) gesaugt wird, die Membranventile 113,114 in den beiden Rohrknien 110. Dabei verbinden die beiden Steuerventile 149 und 150 den gemeinsamen Längskanal 178 entweder mit dem gemeinsamen Belüftungskanal 181,182, sodaß die Membranen 114 auf der Dichtfläche 117 anliegend verbleiben, oder mit dem Längskanal 179 bzw. 180, der mit der jeweiligen Ventilkammer 113 des Rohrknies 110 in Verbindung steht, sodaß die Membran 114 des Saugkanals 22 öffnet.

Die im Steuerblock 13 enthaltende Dosiervorrichtung 9 wird in dieser Ausführung mit unter Druck stehendem Wasser betrieben, das die Pumpenmembran von außen beaufschlagt.

Dem dritten Steuerventil 151 sind ebenfalls drei Querkanäle 191,192 und 193, dem vierten Steuerventil 152 drei weitere Querkanäle 194,195 und 196, und dem fünften Steuerventil 153 drei weitere Querkanäle 197,198 und 199 zugeordnet, die sich unterschiedlich weit von einer Längsschmalseite aus in den Steuerblock 13 erstrecken.

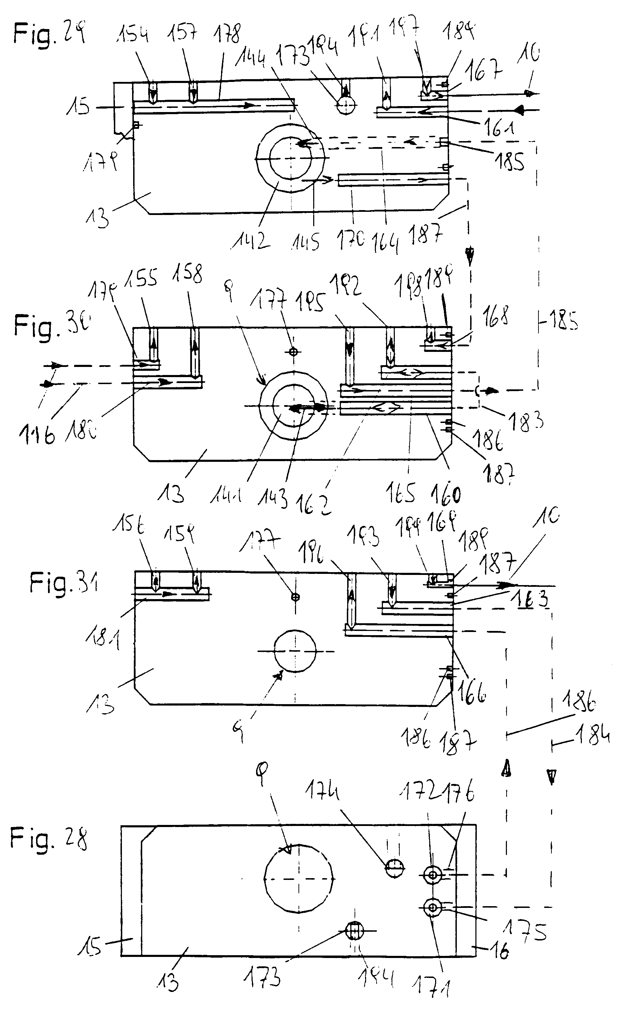

Der Steuerblock 13 weist an der Stirnseite einen Seitenteil 190 auf, der Längskanäle 160 bis 170, 175 und 176 des Steuerblockes 13 verschließt und untereinander verbindet, sowie Anschlüsse für äußere Leitungen aufweist. Wie aus Fig. 28 ersichtlich, sind auch Vertikalkanäle 171 bis 174 vorgesehen, die an der Oberseite des Steuerblockes 13 austreten. Der Vertikalkanal 171 schließt an einen Längskanal 175 und eine Verbindung 184 an, die Teile des Zulaufes zu einer Freifallstrecke sind, die beispielsweise in einem auf den Steuerblock 13 aufgesetzten Behälter ausgebildet sein kann. Vom Behälter aus führt ein Ablauf der Freifallstrecke durch den Vertikalkanal 172, einen Längskanal 176, eine Verbindung 186 und einen weiteren Längskanal 166 zum vierten Steuerventil 152. Durch den Vertikalkanal 173 und den Querkanal 194 führt ein Ablauf des Zusatzmittelvorrats 8 ebenfalls zum vierten Steuerventil 152. Der Vertikalkanal 174 stellt eine Verbindung zur Außenluft, sowie einen eventuellen Überlauf der Freifallstrecke dar und mündet an der Hinterseite des Steuerblockes 13 in einen Schlauchanschluß oder dergleichen.

Die Fig. 29 zeigt eine obere Schnittebene, in der an der linken Seite die Querkanäle 154,157 und der Längskanal 178 ersichtlich sind. Weiters ist an der rechten Seite dem Querkanal 191 des dritten Steuerventils 151 der Längskanal 161 einer Frischwasserleitung zugeordnet. Der Querkanal 197 mündet in den mit einer stirnseitigen Anschlußverbindung 188 (Fig. 27) versehenen Längskanal 167, die alle dem Zufuhrkanal 10 des ersten Saugschlauches 2 zugeordnet sind. Weiters zeigt die obere Schnittebene den Längskanal 164 und der Zuflußkanal 144 zu der eine Rückstellfeder enthaltende Pumpenkammer 142, sowie den Längskanal 170 als Abflußkanal 145 aus der Pumpenkammer 142.

Fig. 30 zeigt eine mittlere Schnittebene, in der links die Querkanäle 155 und 158, sowie die zugehörigen Längskanäle 179 und 180 ersichtlich sind. Auf der rechten Seite mündet ein Querkanal 195 des vierten Steuerventils 152 in einen Längskanal 165, der über eine Verbindung 185 mit dem Längskanal 164 und dem Zuflußkanal 144 zur Pumpenkammer 142 verbunden ist. Der Querkanal 192 des dritten Steuerventiles 151 mündet in den Längskanal 162, an den eine Verbindung 183 mit dem Längskanal 160 anschließt. Die Längskanäle 160 und 162 sowie ihre Verbindung 183 sind Teile der Frischwasserleitung zum Arbeitsraum 141 der Dosiervorrichtung 9. Schließlich ist in der mittleren Schnittebene noch der Querkanal 198 des fünften Steuerventiles 153 gezeigt, der in den Längskanal 168 mündet, der über die Verbindung 187 mit dem Längskanal 170 (obere Schnittebene) verbunden ist. Die Längskanäle 168 und 170, sowie ihre Verbindung 187 sind Teile des Abflußkanals 145 aus der Pumpenkammer 142.

Fig. 31 zeigt eine dritte, untere horizontale Schnittebene durch den Steuerblock 13. An der linken Seite sind beide Querkanäle 156 und 159 mit dem Belüftungskanal 181 verbunden, der gemäß Fig. 26 über einen Vertikalkanal 182 mit der Außenluft in Verbindung steht. Der Querkanal 193 des dritten Steuerventils 151 mündet in den Längskanal 163, der über die Verbindung 183, den Längskanal 175 und den Vertikalkanal 171 Frischwasser an die Freifallstrecke weiterleitet. Der Querkanal 196 des vierten Steuerventiles 152 ist mit dem Längskanal 166 und über die Verbindung 186 und den Längskanal 176 mit dem Vertikalkanal 172 verbunden, die dem Ablauf des Zusatzmittelbehälters 8 angehören. Der Querkanal 199 des fünften Steuerventils 153 mündet in den Längskanal 169, der mit einer stirnseitigen Anschlußverbindung 189 (Fig. 27) versehen ist. Diese sind Teile des Zufuhrkanals 10 des zweiten Saugschlauches 2. Die in den Figuren gezeigten Pfeile geben jeweils die Strömungsrichtung an.

Die in den Stirnseiten des Steuerblockes 13 gezeigten Anschluß- und Verbindungskanäle können auch im jeweiligen Seitenteil 15 und 16 ausgebildet sein. Umfaßt die Schlauchablageeinheit 14 nur einen Saugschlauch 2, so ist der Steuerblock 13 einfacher ausgebildet, da die Steuerventile 52 und 56 samt den zugehörigen Querkanälen und Längskanälen entfallen können.

Weiters kann über ein weiteres, nicht gezeigtes Steuerventil eine Abzweigung aus dem Verbindungskanal 99 (Fig. 14) oder aus der Leitung 168,170,187 vorgesehen sein, sodaß Zusatzmittel zu einer, insbesondere ebenfalls über eine Freifallstrecke geführte Wasserversorgung einer Speischale oder einem anderen Verbraucher zugeführt werden kann, die dadurch ebenfalls in Intervallen gespült und/oder desinfiziert werden kann. In der Ausführung nach Fig. 29/30 kann dieses Steuerventil sehr leicht ebenfalls im Steuerblock 13 untergebracht werden.

## Patentansprüche

1. Einrichtung an einer zahnärztlichen Absauganlage, in der mittels Saugluft ein Flüssigkeitsfeststoffgemisch aus dem Mund des Patienten abgesaugt, über einen durch ein Mundstück (3), einen beweglichen Saugschlauch (2) und einen Anschlußblock (12) einer Schlauchablageeinheit (14) führenden Saugkanal (22) in einen Abscheider (6) gefördert und dort von der Saugluft getrennt wird, mit einem Vorrat (8) eines fließfähigen Zusatzmittels, mit einer Dosiervorrichtung (9), und mit einer Steuervorrichtung für die Zugabe des Zusatzmittels, wobei dem Mundstück (3) eine Zugabestelle (11) für das Zusatzmittel zum Gemisch zugeordnet ist, dadurch gekennzeichnet, daß zumindest zwei Saugschläuche (2) vorgesehen sind, daß die Dosiervorrichtung (9) am Anschlußblock (12) der Schlauchablageeinheit (14) angeordnet ist, und daß von der Dosiervorrichtung (9) pro Saugschlauch (2) ein Zuführkanal (10) ausgeht, der zwischen der Dosiervorrichtung (9) und der Zugabestelle (11) am Mundstück (3) jeweils dem Saugkanal (22) folgend vorgesehen ist.

2. Einrichtung nach Anspruch 1, dadurch gekennzeichnet, daß der Zuführkanal (10) einen Zuführschlauch umfaßt, der mit der Innenwand des Saugschlauches (2) verbunden ist.

3. Einrichtung nach Anspruch 2, dadurch gekennzeichnet, daß der Zuführkanal (10) an beiden Enden des Saugschlauches (2) über ein Saugschlauchanschlußstück (28,45) in den bzw. aus dem Saugschlauch (2) geführt ist.

4. Einrichtung nach Anspruch 3, dadurch gekennzeichnet, daß das Saugschlauchanschlußstück (28) einen abgestuften Steckzapfen (44) mit einer zwischen zwei Dichtringen (49) ausgebildeten Umfangsnut (36) aufweist.

5. Einrichtung nach einem der Ansprüche 1 bis 4, dadurch gekennzeichnet, daß das Mundstück (3) ein an den Saugschlauch (2) ansteckbares Saughandstück (21) und eine ansteckbare Saugkanüle (20) umfaßt, wobei die Zugabestelle (11) im Bereich der Steckkupplung (25) der Saugkanüle (20) am Saughandstück (21) ausgebildet ist.

6. Einrichtung nach Anspruch 5, dadurch gekennzeichnet, daß die Zugabestelle (11) einen Ringraum (23) aufweist, aus dem mindestens eine Öffnung (24) in den Saugkanal (22) mündet.

7. Einrichtung nach einem der Ansprüche 1 bis 6, dadurch gekennzeichnet, daß die Dosiervorrichtung (9) und die Steuervorrichtung in einem Steuerblock (13) angeordnet sind, der mit einem an der Schlauchablageeinheit (1) angeordneten Anschlußblock (12) für die Saugschläuche (2) verbunden ist.

8. Einrichtung nach Anspruch 7, dadurch gekennzeichnet, daß der Steuerblock (13) quaderförmig ausgebildet ist, und daS senkrecht zu den Außenflächen des Steuerblockes (13) verlaufende, im Inneren ineinander übergehende Bohrungen Leitungskanäle und den Pumpenraum (50) bilden.

9. Einrichtung nach Anspruch 7 und 8, dadurch gekennzeichnet, daß am Anschlußblock (12) pro Saugschlauch (2) ein Rohrknie (110) drehbar angeordnet ist, und ein als Kupplungsteil ausgebildeter Rohrabschnitt (112) einen Ringraum (126) aufweist, der mit der Umfangsnut (36) des Saugschlauchanschlußstückes (28) korrespondiert, und der mit einem Längskanal (62,67,167,169) des Steuerblockes (13) strömungsverbunden ist.

10. Einrichtung nach Anspruch 9, dadurch gekennzeichnet, daß das Rohrknie (110) eine Absperreinrichtung (113,114) für den Saugkanal (22) und einen vom Ringraum (126) des Rohrabschnittes (112) nach außen führenden Anschlußstutzen (124) aufweist.

## Claims

1. An arrangement on a dental suction implement, in which a mixture of liquids and solids is sucked from the mouth of the patient by means of suction air, moved through a suction channel (22) that passes through a mouthpiece (3), a moveable suction hose (2), and a suction hose storage unit (14) into a separator (6), where it is separated from the suction air, said arrangement comprising a supply (8) of a pourable additive agent, a metering device (9) and a control system for the addition of the additive agent, an admixture point (11) for the additive agent to the mixture being associated with the mouthpiece (3), characterized in that at least two suction hoses (2) are provided, in that the metering device (9) is arranged on the hose storage unit (14), and in that a supply channel (10) for each suction hose (2) runs from the metering device (9) and is provided between the metering device (9) and the admixture point (11) on the mouthpiece (3), in each instance following the suction channel (22).

2. An arrangement as defined in claim 1, characterized in that the supply channel (10) comprises a supply hose that is connected to the inside wall of the suction hose (2).

3. An arrangement as defined in claim 2, characterized in that the supply channel (10) at both ends of the suction hose (2) is routed through a suction hose connector piece (28, 45) into the or out of the suction hose (2).

4. An arrangement as defined in claim 3, characterized in that the suction hose connector piece (28) incorporates a stepped plug (44) with a peripheral groove (36) that is formed between two sealing rings (49).

5. An arrangement as defined in one of the claims 1 to 4, characterized in that the mouthpiece (3) comprises a suction handpiece (21), that can be installed on the suction hose (2), and an installable suction cannula (20), the admixture point (11) being formed in the area of the push coupling (25) of the suction cannula (20) on the suction handpiece (21).

6. An arrangement as defined in claim 5, characterized in that the admixture point (11) incorporates an annular chamber (23) from which at least one opening (24) opens out into the suction channel (22).

7. An arrangement as defined in one of the claims 1 to 6, characterized in that the metering device (9) and the control device are arranged in a control block (13) that is connected with a connector block (12) for the suction hoses (2) that is arranged on the hose storage unit (1).

8. An arrangement as defined in claim 7, characterized in that the control block (13) is in the form of a block; and in that bores that are perpendicular to the outer surfaces of the control block (13) and which merge together in the interior form conduits and the pump chamber (50).

9. An arrangement as defined in claim 7 and claim 8, characterized in that a pipe elbow (110) for each suction hose (2) is arranged on the connector block (12) so as to be rotatable, and a pipe section (112) that is configured as a coupling element incorporates an annular chamber (126) that corresponds to the peripheral groove (36) of the suction hose connector piece (28) and which is connected with a longitudinal channel (62, 67, 167, 169) of the control block (13) so as to provide for a flow.

10. An arrangement as defined in claim 9, characterized in that the pipe elbow (110) incorporates a shut-off device (113, 114) for the suction channel (22) and a connector piece (124) that leads outward from the annular chamber (126) of the pipe section (112).

## Revendications

1. Dispositif sur une installation d'aspiration dentaire dans laquelle un mélange liquide-solide est aspiré de la bouche du patient à l'aide d'air d'aspiration, est amené dans un séparateur (6) par un conduit d'aspiration (22) qui passe par une pièce buccale (3), un tuyau d'aspiration mobile (2) et un bloc de raccordement (12) d'une unité de réception de tuyau (14), et est séparé de l'air d'aspiration dans le séparateur (6), comportant une réserve (8) d'additif fluide, un dispositif doseur (9) et un dispositif de commande pour l'adjonction de l'additif, un poste d'adjonction (11) prévu pour ajouter l'additif au mélange étant associé à la pièce buccale (3), caractérisé en ce qu'il est prévu au moins deux tuyaux d'aspiration (2), en ce que le dispositif de dosage (9) est disposé au niveau du bloc de raccordement (12) de l'unité de réception de tuyau (14), et en ce qu'on fait partir du dispositif doseur (9), pour chaque tuyau d'aspiration (2), un conduit d'amenée (10) qui suit le conduit d'aspiration (22), entre le dispositif doseur (9) et le poste d'adjonction (11) prévu au niveau de la pièce buccale (3).

2. Dispositif selon la revendication 1, caractérisé en ce que le conduit d'amenée (10) comprend un tuyau d'amenée qui est relié à la paroi intérieure du tuyau d'aspiration (2).

3. Dispositif selon la revendication 2, caractérisé en ce que, aux deux extrémités du tuyau d'aspiration (2), le conduit d'amenée (10) est amené dans le tuyau d'aspiration (2) et hors de celui-ci par l'intermédiaire d'une pièce de raccordement de tuyau d'aspiration (28, 45).

4. Dispositif selon la revendication 3, caractérisé en ce que la pièce de raccordement de tuyau d'aspiration (28) comporte un tourillon d'enfichage étagé (44) pourvu d'une rainure périphérique (36) formée entre deux bagues d'étanchéité (49).

5. Dispositif selon l'une des revendications 1 à 4, caractérisé en ce que la pièce buccale (3) comprend une pièce manuelle d'aspiration (21) apte à être enfichée sur le tuyau d'aspiration (2) et une canule d'aspiration (20) apte à être enfichée, le poste d'adjonction (11) étant formé dans la zone de l'accouplement par enfichage (25) entre la canule d'aspiration (20) et la pièce manuelle d'aspiration (21).

6. Dispositif selon la revendication 5, caractérisé en ce que le poste d'adjonction (11) comporte un espace annulaire (23) d'où au moins une ouverture (24) débouche dans le conduit d'aspiration (22).

7. Dispositif selon l'une des revendications 1 à 6, caractérisé en ce que le dispositif doseur (9) et le dispositif de commande sont disposés dans un bloc de commande (13) qui est relié à un bloc de raccordement (12), disposé au niveau de l'unité de réception de tuyau (1), pour les tuyaux d'aspiration (2).

8. Dispositif selon la revendication 7, caractérisé en ce que le bloc de commande (13) a la forme d'un parallélipipède, et en ce que des perçages perpendiculaires aux surfaces extérieures du bloc de commande (13) et communiquant entre eux à l'intérieur forment des conduites et l'espace de pompe (50).

9. Dispositif selon les revendications 7 et 8, caractérisé en ce que pour chaque tuyau d'aspiration (2), un raccord coudé à 90° (110) est disposé en rotation au niveau du bloc de raccordement (12), et une section tubulaire (112) conçue comme un élément d'accouplement comporte un espace annulaire (126) qui correspond à la rainure périphérique (36) de la pièce de raccordement de tuyau d'aspiration (28) et qui est relié par écoulement à un conduit longitudinal (62, 67, 167, 169) du bloc de commande (13).

10. Dispositif selon la revendication 9, caractérisé en ce que le raccord coudé à 90° (110) comporte un dispositif d'arrêt (113, 114) pour le conduit d'aspiration (22), et un raccord (124) allant de l'espace annulaire (126) de la section tubulaire (112) vers l'extérieur.
